# FASCICULE DE BREVET EUROPEEN

(11) **EP 1 549 930 B1**
(45) Date de publication et mention de la délivrance du brevet: **12.12.2007**
(21) Numéro de dépôt: 03780208.9
(22) Date de dépôt: 01.10.2003
(51) Int. Cl.: G01N 21/31

(54) **DISPOSITIF OPTIQUE PRODUISANT DEUX FAISCEAUX CAPABLES D'ATTEINDRE UN DETECTEUR COMMUN.**
OPTISCHE VORRICHTUNG DIE ZWEI STRAHLEN ERZEUGT DIE EINEN GEMEINSAMEN DETEKTOR ERREICHEN KÖNNEN
OPTICAL DEVICE PRODUCING TWO BEAMS CAPABLE OF REACHING A COMMON SENSOR

(30) Priorité: 11.10.2002 FR 0212684
(43) Date de publication de la demande: 06.07.2005
(73) Titulaire: COMMISSARIAT A L'ENERGIE ATOMIQUE, 75752 Paris 15ème (FR)
(72) Inventeur: KOPP, Christophe, F- 38120 FONTANIL-CORNILLON (FR); LIOT, Vincent, F-38000 Grenoble (FR)
(74) Mandataire: Hecké, Gérard
(86) Numéro de dépôt international: PCT/FR2003/002880
(87) Numéro de publication internationale: WO 2004/034039

(56) Documents cités:
- EP-A- 0 457 624
- EP-A- 0 489 546
- DE-B- 1 079 857
- US-A- 4 305 659
- US-A- 4 880 304

## Description

### Domaine technique de l'invention

L'invention concerne un dispositif optique comportant des moyens réfléchissants disposés sur le chemin optique d'un faisceau incident émis par une première source optique, de manière à former un faisceau lumineux réfléchi, et une seconde source optique produisant un second faisceau lumineux de longueur d'onde différente, de manière à ce que le faisceau réfléchi et le second faisceau lumineux traversent une zone de l'espace, dans laquelle est destiné à être disposé un objet à analyser, et atteignent un détecteur commun.

### État de la technique

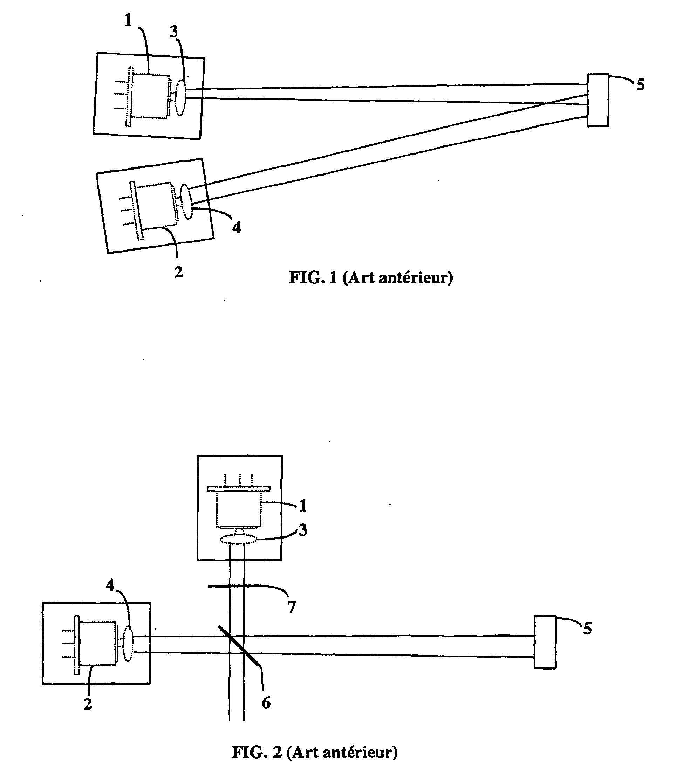

Un premier dispositif connu (figure 1), permettant à deux faisceaux émis par deux sources optiques d'atteindre un même détecteur, comporte deux sources optiques 1 et 2, disposées sensiblement côte à côte, l'orientation d'une des deux sources pouvant être réglée pour focaliser le faisceau émis par celle-ci sur le détecteur. La divergence des deux sources optiques 1 et 2 est réduite préalablement par deux lentilles de collimation 3 et 4, permettant chacune d'obtenir un angle de divergence inférieur à 10°. Le dispositif utilisant une source optique à orientation réglable est cependant très encombrant et l'écart entre les deux faisceaux est souvent trop important. De plus, il n'est pas toujours possible d'équilibrer la puissance émise par chacune des sources.

Un second dispositif connu (figure 2 et brevet US4305659) comporte deux sources optiques 1 et 2 disposées de manière à émettre des faisceaux sensiblement perpendiculaires, et une lame séparatrice 6 disposée à l'intersection des deux faisceaux optiques. Un élément absorbant 7 peut être disposé sur le chemin optique d'un des deux faisceaux, de manière à en atténuer la puissance. La lame séparatrice 6 entraîne cependant une perte en puissance d'au moins 50 % sur la puissance totale des deux faisceaux. De plus, avec ce type de montage, seules deux sources optiques peuvent être montées simultanément.

Dans le document DE1079857, un miroir, également disposé à l'intersection des deux faisceaux, comporte un orifice central destiné à laisser passer un des deux faisceaux sans le dévier. Dans cette conformation, la présence de l'orifice central provoque la perte d'une partie du faisceau réfléchi par le miroir, ce qui diminue la puissance du faisceau réfléchi par le miroir.

### Objet de l'invention

L'invention a pour but un dispositif optique permettant de produire deux faisceaux se focalisant sur un même détecteur, tout en contrôlant la puissance optique reçue par le détecteur.

Selon l'invention, ce but est atteint par les revendications annexées.

Selon un développement de l'invention, le dispositif optique comporte des moyens de déformation des moyens réfléchissants.

Selon un mode de réalisation préférentiel de l'invention, le dispositif optique comporte des moyens d'orientation des moyens réfléchissants.

Selon une autre caractéristique de l'invention, le dispositif optique comporte une lentille de collimation commune aux première et seconde sources et disposée à l'intersection du premier faisceau incident et du second faisceau.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 et 2 représentent schématiquement deux dispositifs optiques selon l'art antérieur.
La figure 3 est une représentation schématique d'un premier mode de réalisation d'un dispositif optique.
Les figures 4 et 5 représentent respectivement des premier et second modes de réalisation de moyens réfléchissants d'un dispositif optique. Les figures 6 et 7 représentent des deuxième et troisième modes de réalisation d'un dispositif.
Les figures 8 et 9 représentent schématiquement un dispositif optique selon l'invention, comportant une lentille de collimation commune.
La figure 10 est une représentation schématique d'un mode particulier de réalisation d'un dispositif selon l'invention, comportant une lentille disposée avant un détecteur.

### Description de modes particuliers de réalisation.

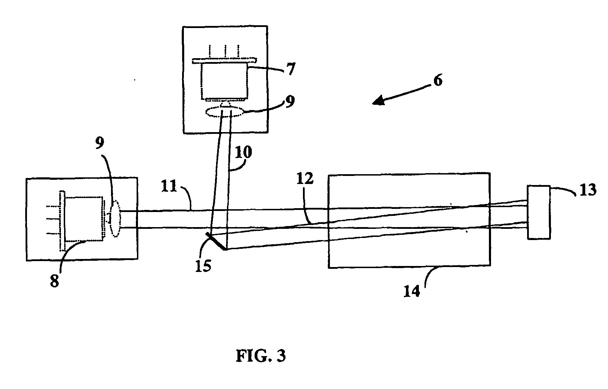

Selon un premier mode de réalisation représenté sur la figure 3, un dispositif optique 6 comporte une première source optique 7 et une seconde source optique 8, disposées orthogonalement. Les sources optiques 7 et 8 peuvent être de tout type. Elles peuvent être différentes l'une de l'autre ou similaires, émettre une lumière cohérente ou incohérente. Elles sont, par exemple, constituées par une diode laser, un filament d'une lampe incandescente, une diode électroluminescente ou un laser.

Sur la figure 3, les première et seconde sources optiques 7 et 8 sont des sources optiques divergentes comportant chacune une lentille de collimation 9 destinée à réduire la divergence du faisceau produit par chaque source optique. Les première et seconde sources optiques 7 et 8 émettent respectivement un premier faisceau lumineux incident 10 et un second faisceau lumineux 11 de longueur d'onde différente de celle du premier faisceau incident 10.

Des moyens réfléchissants, constitués par un miroir 15 sur la figure 3 et disposés sur le chemin optique du faisceau incident 10, permettent de former un faisceau lumineux réfléchi 12, à partir du faisceau incident 10. Les moyens réfléchissants sont disposés à proximité et en dehors du chemin optique du second faisceau lumineux 11, de sorte que celui-ci atteint directement la zone d'espace 14 et, de préférence, un détecteur 13, sans être dévié. Le faisceau réfléchi 12 et le second faisceau lumineux 11 traversent une zone 14 d'espace dans laquelle est destiné à être disposé un objet à analyser et ils atteignent ensuite un même détecteur 13. Ainsi, les chemins optiques du faisceau réfléchi 12 et du second faisceau 11 peuvent éventuellement se couper dans la zone d'espace 14. Dans le mode de réalisation représenté sur cette figure, le miroir 15 est disposé en dehors et à proximité du chemin optique, c'est-à-dire au voisinage proche du chemin optique du second faisceau mais en dehors de celui-ci. Ainsi, contrairement à la lame séparatrice 6 de la figure 2 et au miroir du document DE1079857, le second faisceau (11) ne traverse pas le miroir 15.

Le dispositif optique 6 comporte, de préférence, des moyens d'orientation des moyens réfléchissants, de manière à ajuster le chemin optique du faisceau lumineux réfléchi 12 pour qu'il passe dans la zone 14 d'espace et atteigne le détecteur 13. Les moyens d'orientation permettent également de ne renvoyer qu'une partie de la puissance optique du premier faisceau incident 10, selon le coefficient de réflexion des moyens réfléchissants. Les moyens d'orientation peuvent être de tout type. A titre d'exemple, ils peuvent comprendre un système hydraulique ou des vis, actionnés par un moteur ou une pompe.

Les moyens réfléchissants sont, de préférence, un miroir ou une lame semi-réfléchissante. Ils peuvent être constitués par un empilement de couches en matériau diélectrique formant ainsi un miroir de Bragg ou par un dépôt métallique, par exemple de l'argent ou de l'or qui réfléchit 97% de la puissance d'un rayonnement lumineux dans l'infrarouge. Les moyens réfléchissants peuvent également être constitués par des lames de matériaux cristallins tels que le silicium ou le germanium ou par des lames de matériaux vitreux comme le verre.

Les moyens réfléchissants comportent, de préférence, des moyens de support qui peuvent être solidaires de la structure de support du dispositif optique ou bien ils peuvent être séparés de cette structure, de sorte qu'ils puissent se déplacer par rapport à celle-ci.

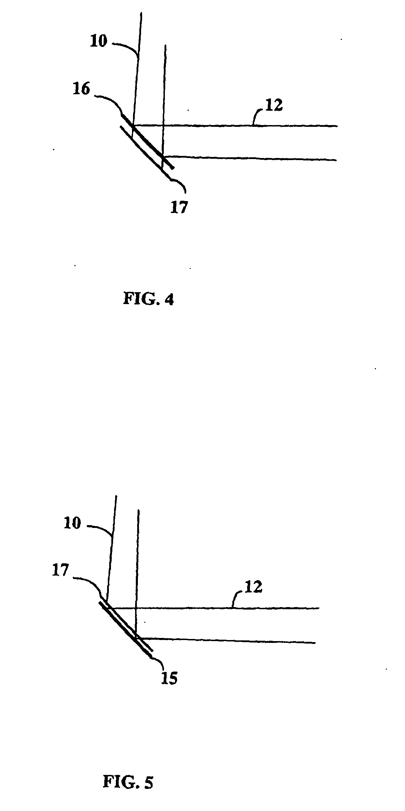

Sur la figure 4, les moyens réfléchissants sont constitués par une lame semi-réfléchissante 16, derrière laquelle est disposé un élément absorbant 17, qui absorbe au moins une partie du premier faisceau incident 10. Le faisceau lumineux 12 réfléchi par la lame semi-transparente 16 est alors atténué par rapport au premier faisceau incident 10. Cette atténuation dépend également du coefficient de réflexion de la lame semi-réfléchissante 16. La lame semi-réfléchissante 16 est, de préférence, disposée sur l'élément absorbant 17, qui peut être un revêtement tel qu'une peinture ou un dépôt disposé sur la surface non réfléchissante de la lame semi-réfléchissante. L'élément absorbant 17 peut également être constitué par un matériau absorbant sur lequel est collée la lame semi-réfléchissante.

Dans le cas où les moyens réfléchissants comportent un miroir 15 (figure 5), un élément absorbant 17 destiné à atténuer la puissance optique du premier faisceau incident 10, peut également être disposé devant le miroir 15. L'élément absorbant 17 est, de préférence, disposé sur la surface réfléchissante du miroir. Il peut ainsi être collé, déposé ou pulvérisé sous la forme d'un aérosol de peinture, ce qui permet de contrôler très finement l'absorption du miroir 15.

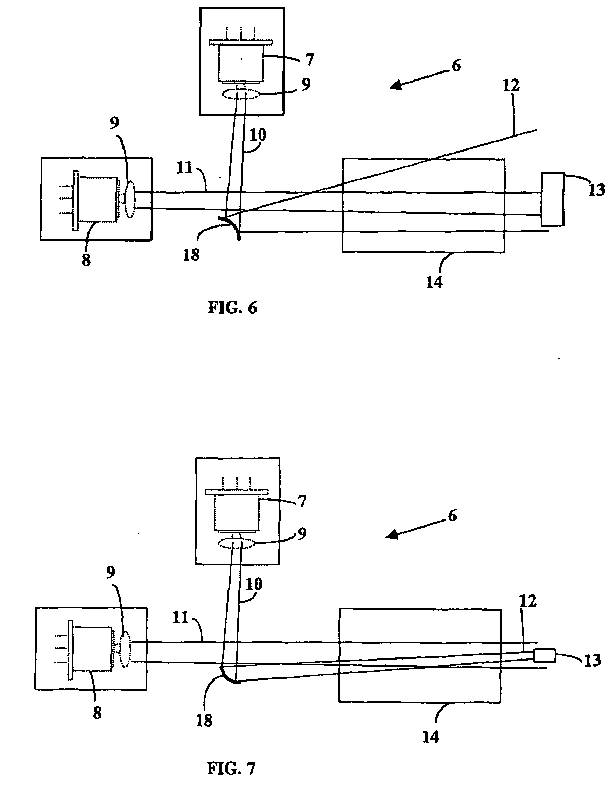

Le dispositif optique peut également comporter des moyens de déformation des moyens réfléchissants. Sur les figures 6 et 7 les moyens réfléchissants sont constitués par un miroir déformable 18. Le miroir déformable 18 peut être, par exemple, constitué par une fine plaque métallique, en or ou en argent, polie sur une face. Il peut également être constitué par un revêtement réfléchissant déposé sur un matériau déformable, par exemple, une feuille d'or collée sur du caoutchouc ou sur une plaque métallique. Les moyens de déformation contrôlent la courbure du miroir de manière à régler précisément la puissance optique reçue par le détecteur.

Ainsi, un miroir convexe 18 (figure 6) permet d'élargir le faisceau lumineux réfléchi 12 et notamment le spot lumineux qu'il crée au niveau du détecteur 13, alors qu'un miroir concave (figure 7) affine le faisceau lumineux réfléchi 12, en particulier le spot crée par le faisceau réfléchi 12 et détecté par le détecteur 13. Le dispositif optique présente ainsi l'avantage de contrôler la puissance reçue par le détecteur.

La déformation du miroir s'adapte particulièrement à la puissance des première et seconde sources 7 et 8. En effet, si la première source 7 est la source la moins puissante des deux sources 7 et 8, l'utilisation d'un miroir 18 concave (figure 7) permet alors de rétrécir le faisceau réfléchi 12 et de le focaliser plus fortement sur le détecteur 13. A l'opposé, si la première source 7 est la source la plus puissante des deux, l'utilisation d'un miroir 18 convexe (figure 6) atténue la puissance du faisceau réfléchi 12, en l'élargissant.

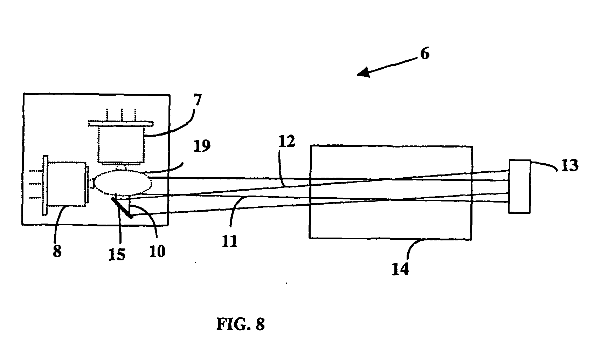

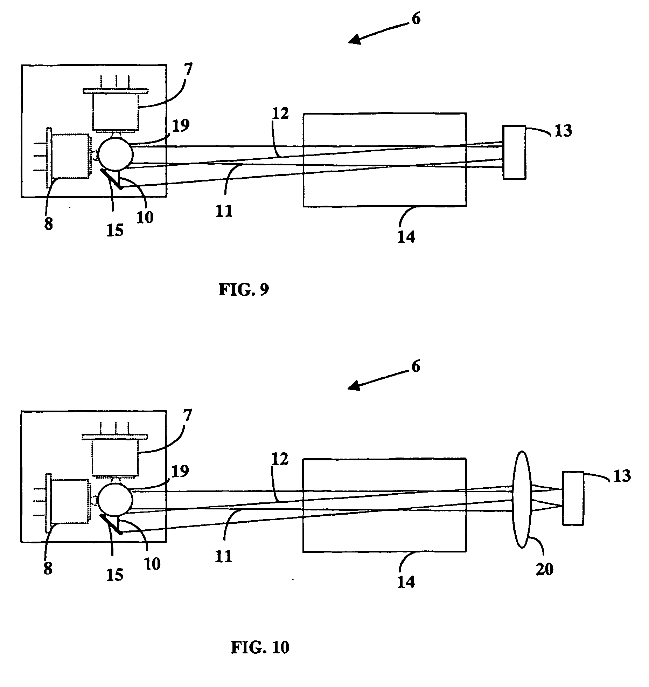

Le dispositif optique 6 selon l'invention comporte une unique lentille de collimation 19, commune aux deux sources optiques 7 et 8 (figure 8 et 9). La lentille de collimation 19 est disposée à l'intersection des chemins optiques du premier faisceau incident 10 et du second faisceau 11. Elle permet non seulement de réduire simultanément la divergence des deux faisceaux, mais aussi d'augmenter la focalisation de la puissance optique sur le détecteur 13, après la traversée de la zone 14 de l'espace.

Sur la figure 9, la lentille de collimation 19 est parfaitement sphérique, ce qui permet de réduire simultanément la divergence des deux faisceaux, en s'affranchissant des difficultés de positionnement de la lentille de collimation 19 par rapport aux deux sources optiques 7 et 8. Le dispositif optique peut également comporter une lentille 20 disposée entre la zone de l'espace 14 dans laquelle est destiné à être disposé l'objet à analyser et le détecteur 13 (figure 10). La lentille 20 permet de focaliser le faisceau réfléchi 12 et le second faisceau 11, sur le détecteur 13.

A titre d'exemple, le dispositif optique peut être utilisé pour détecter des gaz polluants, avec des émetteurs infrarouges, comme des diodes électroluminescentes ou des filaments de lampes à incandescence. Ainsi l'un des faisceaux est destiné à être absorbé par le gaz polluant et l'autre sert de faisceau de référence, c'est-à-dire qu'il n'absorbe pas de gaz polluant mais subit les mêmes perturbations optiques que le premier faisceau. Les deux faisceaux issus du dispositif optique traversent soit une zone contenant le gaz polluant soit directement l'air ambiant, avant d'atteindre un même détecteur.

L'invention n'est pas limitée aux modes de réalisation décrits ci-dessus. Ainsi, le détecteur peut être remplacé par une fibre optique. De plus, le second faisceau 11 et le faisceau réfléchi 12 peuvent éventuellement être déviés, après la zone de l'espace 14, par tout type de moyens connus de manière à être focalisés sur le détecteur.

## Revendications

1. Dispositif optique comportant des moyens réfléchissants disposés sur le chemin optique d'un faisceau incident (10) émis par une première source optique (7), de manière à former un faisceau lumineux réfléchi (12), et une seconde source optique (8) produisant un second faisceau lumineux (11) de longueur d'onde différente, de manière à ce que le faisceau réfléchi (12) et le second faisceau lumineux (11) traversent une zone de l'espace (14), dans laquelle est destiné à être disposé un objet à analyser, et atteignent un détecteur (13) commun, dispositif optique (6) **caractérisé en ce que** les moyens réfléchissants sont disposés à proximité et en dehors du chemin optique du second faisceau (11) et **en ce que** le dispositif optique (6) comporte une lentille de collimation (19) commune à la première source (7) et la seconde source 8) et disposée à l'intersection du premier faisceau incident (10) et du second faisceau (11).

2. Dispositif optique selon la revendication 1, **caractérisé en ce que** le dispositif optique (6) comporte des moyens de déformation des moyens réfléchissants.

3. Dispositif optique selon l'une des revendications 1 et 2, **caractérisé en ce que** le dispositif optique (6) comporte des moyens d'orientation des moyens réfléchissants.

4. Dispositif optique selon l'une des revendications 1 à 3, **caractérisé en ce que** les moyens réfléchissants sont constitués par un miroir (15).

5. Dispositif optique selon la revendication 4, **caractérisé en ce qu'**un élément (17) absorbant une partie d'un rayonnement lumineux est disposé sur la surface réfléchissante du miroir (15).

6. Dispositif optique selon l'une des revendications 1 à 3, **caractérisé en ce que** les moyens réfléchissants sont constitués par une lame semi-réfléchissante (16).

7. Dispositif optique selon la revendication 6, **caractérisé en ce que** la lame semi-réfléchissante (16) est disposée sur un élément (17) absorbant une partie d'un rayonnement lumineux.

8. Dispositif optique selon l'une quelconque des revendications 1 à 7, **caractérisé en ce que** la lentille de collimation (19) est sphérique.

9. Dispositif optique selon l'une quelconque des revendications 1 à 8, **caractérisé en ce qu'**une lentille (20) est disposée entre la zone de l'espace (14) dans laquelle est destiné à être disposé l'objet à analyser et le détecteur (13).

## Claims

1. Optical device comprising reflecting means arranged on the optical path of an incident beam (10) emitted by a first optical source (7) so as to form a reflected light beam (12), and a second optical source (8) producing a second light beam (11) of different wavelength so that the reflected beam (12) and the second light beam (11) pass through a zone of the space (14) wherein an object to be analyzed is to be exposed, and reach a common sensor (13), optical device (6) **characterized in that** the reflecting means are arranged proximate and outside to the optical path of the second beam (11) and **in that** the optical device (6) comprises a collimating lens (19) common to the first source (7) and the second source (8) and arranged at the intersection of the first incident beam (10) and of the second beam (11).

2. Optical device according to claim 1, **characterized in that** the optical device (6) comprises means for deforming the reflecting means.

3. Optical device according to one of the claims 1 and 2, **characterized in that** the optical device (6) comprises means for orienting the reflecting means.

4. Optical device according to one of the claims 1 to 3, **characterized in that** the reflecting means are formed by a mirror (15).

5. Optical device according to claim 4, **characterized in that** an element (17) absorbing a part of a light radiation is arranged on the reflecting surface of the mirror (15).

6. Optical device according to one of the claims 1 to 3, **characterized in that** the reflecting means are formed by a semi-reflecting plate (16).

7. Optical device according to claim 6, **characterized in that** the semi-reflecting plate (16) is arranged on an element (17) absorbing a part of a light radiation.

8. Optical device according to any one of the claims 1 to 7, **characterized in that** the collimating lens (19) is spherical.

9. Optical device according to any one of the claims 1 to 8, **characterized in that** a lens (20) is arranged between the zone of the space (14) wherein the object to be analyzed is to be exposed and the sensor (13).

## Patentansprüche

1. Optische Vorrichtung mit reflektierenden Mitteln, die auf der optischen Bahn eines von einer ersten optischen Quelle (7) ausgesandten einlaufenden Strahls (10) angeordnet sind, um einen reflektierten Lichtstrahl (12) zu bilden, und mit einer zweiten optischen Quelle, die einen zweiten Lichtstrahl (11) einer anderen Wellenlänge erzeugt, sodass der reflektierte Strahl (12) und der zweite Lichtstrahl (11) einen Bereich (14) des Raums durchqueren, in dem ein zu analysierendes Objekt angeordnet sein soll, und einen gemeinsamen Sensor (13) erreichen, optische Vorrichtung, die **dadurch gekennzeichnet ist, dass** die reflektierenden Mittel nahe und außerhalb der optischen Bahn des zweiten Strahls (11) angeordnet sind, sowie **dadurch**, dass die optische Vorrichtung (6) eine Kollimationslinse (19) umfasst, die der ersten Quelle (8) und der zweiten Quelle (7) gemein und am Schnittpunkt des ersten, einlaufenden Strahls (10) und des zweiten Strahls (11) angeordnet ist.

2. Optische Vorrichtung nach Anspruch 1, **dadurch gekennzeichnet, dass** die optische Vorrichtung (6) Mittel zur Verformung der reflektierenden Mittel umfasst.

3. Optische Vorrichtung nach einem der Ansprüche 1 und 2, **dadurch gekennzeichnet, dass** die optische Vorrichtung (6) Mittel zum Ausrichten der reflektierenden Mittel umfasst.

4. Optische Vorrichtung nach einem der Ansprüche 1 bis 3, **dadurch gekennzeichnet, dass** die reflektierenden Mittel von einem Spiegel (15) gebildet werden.

5. Optische Vorrichtung nach Anspruch 4, **dadurch gekennzeichnet, dass** ein Element (17), das einen Teil einer Lichtstrahlung absorbiert, auf der reflektierenden Oberfläche des Spiegels (15) angeordnet ist.

6. Optische Vorrichtung nach einem der Ansprüche 1 bis 3, **dadurch gekennzeichnet, dass** die reflektierenden Mittel von einer halbreflektierenden Platte (16) gebildet werden.

7. Optische Vorrichtung nach Anspruch 6, **dadurch gekennzeichnet, dass** die halbreflektierende Platte (16) auf einem Element (17) angeordnet ist, das einen Teil einer Lichtstrahlung absorbiert.

8. Optische Vorrichtung nach einem der Ansprüche 1 bis 7, **dadurch gekennzeichnet, dass** die Kollimationslinse (19) kugelrund ist.

9. Optische Vorrichtung nach einem der Ansprüche 1 bis 8, **dadurch gekennzeichnet, dass** eine Linse (20) zwischen dem Bereich (14) des Raums, in dem sich das zu analysierende Objekt befinden soll, und dem Sensor (13) angeordnet ist.
